# EUROPEAN PATENT SPECIFICATION

(11) **EP 3 189 570 B1**
(45) Date of publication and mention of the grant of the patent: **28.11.2018**
(21) Application number: 14758563.2
(22) Date of filing: 03.09.2014
(51) Int. Cl.: H02G 15/02, H02G 15/04, H02G 15/06

(54) **AN INSULATED HIGH VOLTAGE CABLE TERMINATION DEVICE, A HOUSING AND A METHOD FOR STRAIGHTENING A LENGTH OF CABLE IN THE HOUSING**
ABSCHLUSSVORRICHTUNG FÜR ISOLIERTES HOCHSPANNUNGSKABEL, GEHÄUSE UND VERFAHREN ZUM RICHTEN EINER KABELLÄNGE IM GEHÄUSE
DISPOSITIF DE TERMINAISON DE CÂBLE HAUTE TENSION ISOLÉ, BOÎTIER ET PROCÉDÉ POUR REDRESSER UNE LONGUEUR DE CÂBLE DANS LE BOÎTIER

(43) Date of publication of application: 12.07.2017
(73) Proprietor: NKT HV Cables GmbH, 5400 Baden (CH)
(72) Inventor: AHLBERG, Tomas, S-370 30 Rödeby (SE); FÄLTH, Fredrik, S-371 38 Karlskrona (SE)
(74) Representative: Kransell & Wennborg KB
(86) International application number: PCT/EP2014/068669
(87) International publication number: WO 2016/034213

(56) References cited:
- EP-A2- 1 646 268
- WO-A1-2014/008934
- DE-A1- 2 251 258
- DE-C1- 19 748 887

## Description

### Technical field of the invention

The present invention relates to the technical field of insulated high voltage electric cables and cable termination devices for such cables. The invention also relates to a housing for a cable termination device and to a method for straightening a length of a high voltage electric cable inside a cable termination device.

### Background

Cables used for electric power distribution are typically operated at thousands of volts, and consequently care must be taken when terminating these cables and connecting them to electrical equipment. A cable termination for medium and high voltages usually comprises a hollow insulator housing into which the cable end is inserted.

EP1646268 discloses a tensioning device for high-voltage cable that has an essentially tubular bell housing in which a tubular holding element for a cable is arranged to be movable along the central axis and a spring arranged between a stop in the bell housing and the holding element that forces the holding element along the central longitudinal axis away from the stop. The holding element carries an indication element so the spring can be detected externally and the spring encloses the high voltage cable.

DE 19748887 discloses a system connecting a high voltage cable to a high voltage installation filled with an insulating gas or liquid, with an installation connector unit in the form of a hard insulating cone and a cable connector unit with a complementary, compliant insulating element. The cone is a hollow body which does not extend into the interior of the high voltage installation.

In an insulated cable termination for a high voltage electric cable, for example a gas or oil insulated cable termination, it is difficult to make sure that the mounted electric cable inside the termination is kept as straight as possible and that it is not arched, so called cable snaking. Cable snaking can occur due to:
- Impact of gravity on the electric cable during mounting of the cable termination lying down, in a horizontal position.
- Poor pre-straightening of the electric cable prior to mounting of the cable termination.
- The measurements during the mounting procedure being within the tolerance range, but still not precise enough to avoid cable snaking.
- A temperature increase inside the cable termination will elongate the electric cable and thus result in cable snaking, or make the issues with snaking more severe.

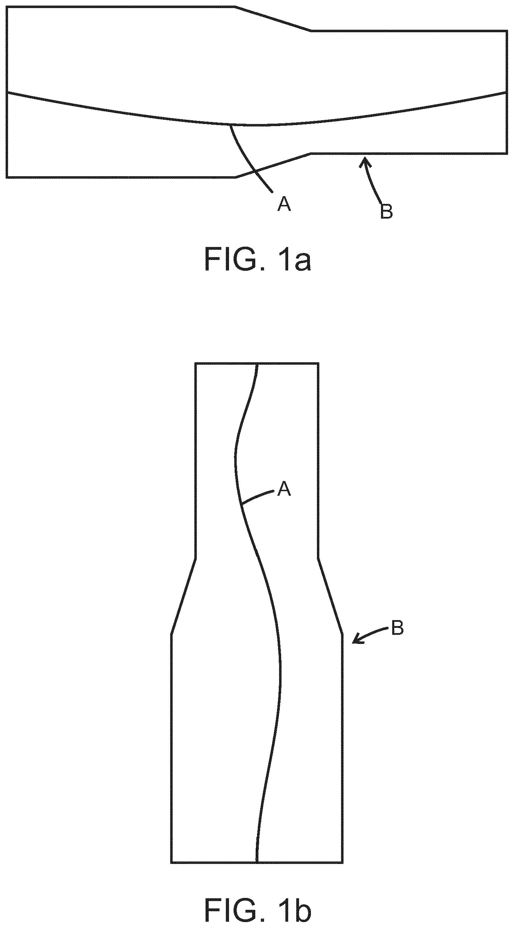

In Fig. 1a is illustrated a cable A that is arched due to gravity inside a cable termination housing B, and in Fig. 1b is illustrated a case of a cable A snaking due to other reasons, when the termination is in an upright position.

When an electric cable is snaking inside the cable termination, it means that somewhere inside the termination there is a smaller insulation distance, between the electric cable and the insulator wall, than what was calculated with in the original design. This can lead to severe problems. For example it can result in a greater risk for electrical flashovers inside the termination, in the gas/oil, between the cable and the wall of the termination, or it can result in a redistribution of the electrical fields inside the termination, which could lead to higher electric stress locally.

### Summary of the invention

An object of the present invention is to provide a solution to the above described problems related to cable snaking in a high voltage electric cable termination device.

This object is achieved by means of the insulated high voltage cable termination device, the housing for an insulated high voltage cable termination device, and the method for adjusting a length of high voltage cable as defined in the appended patent claims.

Accordingly is defined, according to a first aspect of the present invention, an insulated high voltage cable termination device comprising a hollow housing with a first end member at a first end of the housing and a second end member at a second end of the housing, and a side wall connecting said end members, said housing being filled with an insulation medium, the device further comprising a length of high voltage cable located inside the housing and extending from the first end member to the second end member, characterized in that the device comprises a length adjustment arrangement for adjustment of an internal length of the housing between the end members and/or the length of the cable inside the housing. By providing such a length adjustment arrangement it will be possible to adjust the internal length of the housing such that it is essentially adapted to the length of the cable inside the housing and thereby the cable is straightened. Alternatively or additionally, the length adjustment arrangement is provided such that the cable length as such inside the housing is adjusted and it is thereby straightened. The end members of the housing may for example be configured as plates but may also have other shapes. The top end member or cap may for example have a rounded shape.

According to a first embodiment, the length adjustment arrangement may comprise a length adjustable wall section of the side wall of the housing and an arrangement generating a length adjustment of the length adjustable wall section. The length adjustable wall section can be located anywhere along the side wall.

According to one embodiment, the length adjustable wall section may comprise a bellows shaped wall section. By providing a bellows shaped wall section, or corrugated wall section that can be stretched out if subjected to a pulling force, it is possible to obtain a length extension of the concerned wall section. Naturally, the material of the bellows shaped wall section is preferably flexible and chosen with a view to obtain the desired flexibility that will provide the required length extension, on a case to case basis. The choice of material will also have influence on the spring force of the bellows. Other parameters that will have influence on the spring constant and spring force of the bellows are the thickness of the material and design details of the bellows. The length extension may be provoked by a force exerted on the end members, e.g. as will be described below. The length adjustable wall section can also be described as being able to expand or elongate in the longitudinal or axial direction of the cable, i.e. the longitudinal or axial direction of the housing. Naturally, it will also be possible to obtain a length reduction of the wall section, if required. Further, it should be noted that it is also possible to have a length adjustable wall section that undergoes a permanent deformation when extended.

According to an alternative embodiment, the length adjustable wall section may comprise a telescopic wall section. A pressure or pulling force exerted on the end members will provoke the extension of the telescopic wall section, in analogy with the above.

According to one feature, the length adjustable wall section may be pre-stressed by a compression force. This pre-stressing may be obtained by means of a device exerting a compression force on the end of the side wall, e.g. by means of exerting a pressure on one of the end members. By compressing the bellows or the telescopic wall section in advance, before mounting of the cable inside, and thereby obtaining a pre-stressed length adjustable wall section, the bellows or telescopic wall will extend once the compression force ceases, and thereby the cable will be straightened. This pre-stressing may be used on its own or combined with the embodiments described below.

According to one embodiment, the arrangement generating length adjustment of the length adjustable wall section may comprise a device for applying a mechanical force on an end member of the housing and thereby generating a length adjustment of the length adjustable wall section. The length adjustable wall section has such a design that it will increase its length when submitted to a pulling force from the device. The length adjustable wall section may also be designed such that its length is reduced if submitted to a pushing force from the device.

According to another embodiment, the arrangement generating length adjustment of the length adjustable wall section may comprise a regulator device that regulates the pressure of an insulation medium inside the housing. By means of an increase of the pressure inside the housing, it will be possible to exert an increased pressure on the end members of the housing that will push these outwards and thus result in a pulling effect on the length adjustable wall section. The length adjustable wall section has a design such that it will increase its length when submitted to the pulling effect. The length adjustable wall section may also be designed such that its length is reduced when the internal pressure is decreased. The regulator device can be very simple, e.g. an on/off tap for the filling of insulation medium. Usually, the desired pressure is decided in advance of mounting of the termination on the cable.

According to a further feature, the length adjustment arrangement may comprise at least one supplementary spring member. Such a spring member can be used to enhance the inherent spring effect of the bellows, or it can be used in combination with a telescopic wall section. It can be either a compression spring or a tension spring, arranged in such a way that it works to extend the length adjustable wall section and thereby the cable will be stretched and straightened. The spring member can also be used as a return spring, if desired. It will also have the additional effect of providing stability.

According to another embodiment wherein the cable extends through at least one of the end members of the housing, the arrangement generating a length adjustment may comprise a device located externally of said end member, which device comprises a member for applying a mechanical force on the cable and thereby adjusting the length of the cable inside the housing. This type of solution may of course be combined with any one of the above mentioned embodiments.

According to another aspect of the invention is defined a housing for an insulated high voltage cable termination device, comprising a first end member at a first end of the housing and a second end member at a second end of the housing, and a side wall connecting said end members, said housing being hollow and being adapted to receive a high voltage cable therein extending from the first end member to the second end member of the housing, characterised in that the side wall of the housing has a length adjustable wall section by means of which the internal length of the housing between the end members can be adjusted. This housing is suitable for use in the above described high voltage cable termination device.

According to one embodiment, the length adjustable wall section may comprise a bellows shaped wall section. According to another embodiment, the length adjustable wall section may comprise a telescopic wall section. The advantages of these have already been described above.

According to a third aspect of the present invention is defined a method for straightening a length of a high voltage cable located in a cable termination device, which cable termination device comprises a hollow housing with a first end member at a first end of the housing and a second end member at a second end of the housing and a side wall connecting said end members, which length of cable extends from the first end member to the second end member of the housing, characterised in adjusting the internal length of the housing between the end members and/or adjusting the length of the cable that is located inside the housing such that the internal length of the housing essentially corresponds to the length of the cable that is located inside the housing. This method displays advantages corresponding to the advantages described above in connection with the cable termination device.

According to one feature, the method may comprise adjusting the internal length of the housing by adjusting the length of a length adjustable wall section of the side wall of the housing.

According to one feature, the method may comprise pre-stressing the length adjustable wall section by a compression force.

According to one feature, the method may comprise applying a mechanical force on an end member of the housing and thereby generating a length adjustment of the length adjustable wall section.

According to another alternative or additional feature, the method may comprise regulating the pressure of an insulation medium inside the housing and thereby generating a length adjustment of length adjustable wall section.

According to another embodiment, the method may comprise adjusting an active area of at least one end member of the housing, thereby adjusting the resulting pressure force on the end member from the insulation medium inside the housing and generating a length adjustment of the length adjustable wall section.

According to another embodiment, the method may comprise applying a mechanical force on the cable and thereby adjusting the length of the cable inside the housing resulting in a straightening of the cable inside the housing.

The concerned cable can for example be a high voltage land cable or sea cable. Examples of cables are XLPE-cables (PEX cables). It may be a DC cable or an AC cable. By high voltage is meant voltages from 1kV AC/36 kV DC and higher. It will also be applicable to so called extra high voltages, which generally are from 230 kV and higher, and also to so called ultra high voltages, referring to even higher voltages of usually over 800 kV for DC and over 1000 kV for AC.

It should be noted that the use of the word straighten in connection with the cable, does not necessarily mean that the cable is completely straight after the straightening and the length adjustment. The word straighten in the present context should be interpreted to mean that the cable becomes more straight than before, i.e. the snaking effect is reduced.

The cable termination housing may contain additional equipment, e.g. stress control devices, which are not described herein. The cable itself may be a cable that has been stripped of its outer layers to various degrees such that there may for example only be a naked conductor at the outgoing end of the termination. The present invention should not be interpreted as limited to a certain type of termination or a certain type of electric cable. In particular, the term high voltage cable used in the claims should not be limited to a cable that has all its layers intact throughout the termination, but shall be interpreted to also include electric cables in different stages of having been stripped of their various layers. The term cable termination device shall be interpreted to also encompass an inner cable termination device that itself can be surrounded by another external cable termination device, which is sometimes the case.

Further features and advantages of the invention will become apparent from the following detailed description of embodiments.

### Brief description of the drawings

A detailed description of the present invention and embodiments thereof, given as examples only, will now be made with reference to the schematic accompanying drawings, in which:
Fig. 1a illustrates schematically a cable that is arched due to gravity,
Fig. 1b illustrates schematically a case of cable snaking due to other reasons, when the termination is in an upright position,
Fig. 2 illustrates schematically an embodiment of a cable termination device according to the invention,
Fig. 3 illustrates schematically an embodiment of a cable termination device according to the invention,
Fig. 4 illustrates schematically an embodiment of a cable termination device according to the invention,
Fig. 5 illustrates schematically an embodiment of a cable termination device according to the invention, and
Fig. 6 illustrates schematically an embodiment of a cable termination device according to the invention.

Elements that are the same or represent corresponding elements or equivalent elements have been given the same reference numbers in the different figures. None of the figures illustrates details of the cable extending outside of the housing of the cable termination device, but it should be understood that the cable would extend outside the housing, at least at the lower end of the housing. Further, the details of the cable inside the housing are not illustrated. The cable is only schematically illustrated and it can be any type of high voltage electric cable suitable for use in an insulated cable termination device. Nor are any details of other equipment inside the housing illustrated, but it should be understood that there may be other equipment inside the housing.

### Detailed description

Figures 1a and 1b illustrates schematically the problems with cable snaking, as has been already explained with reference to prior art.

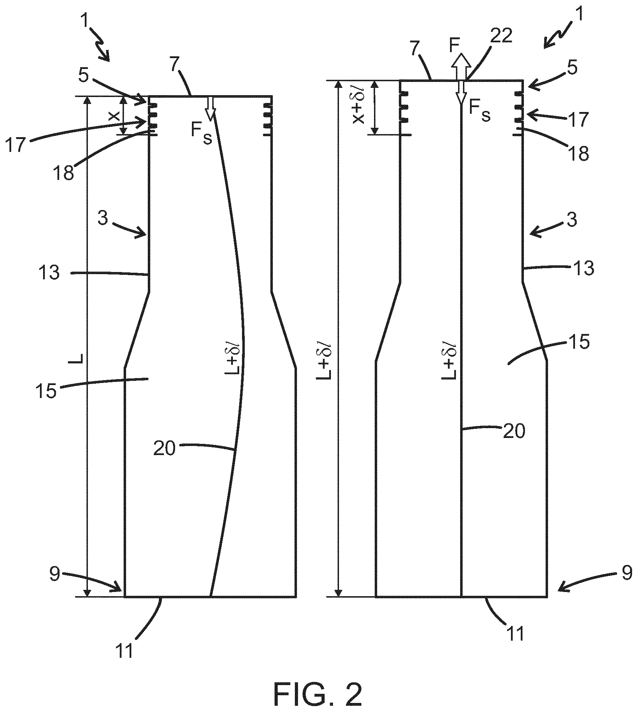

Figure 2 shows an embodiment of an insulated high voltage electric cable termination device 1 and an insulator housing 3 according to the present invention. The housing is filled with an insulating medium and the entire device is pressure sealed. The device comprises a length adjustment arrangement for adjustment of an internal length of the housing between the end members and/or the length of the cable inside the housing. The cable termination device 1 is only very schematically illustrated in an upright position, showing only the elements that are of relevance for the present invention. Thus the cable termination device comprises an insulator housing 3 having a first upper end 5 with a first upper end member 7, a second lower end 9 with a second lower end member 11, and a side wall 13. Often this type of cable termination device has a cylindrical shape with a wider lower portion that is tapered into a narrower upper portion. The housing 3 has a hollow interior 15. The cable termination device further comprises a high voltage electric cable 20 that has been inserted into the housing via an opening (not shown) in the second lower end member 11. The cable will extend outside the lower end member of the housing. The cable 20 will also be immovably fixed, in a pressure sealed manner, at the second lower end member 11 of the housing with some suitable support or attachment means, known per se (not shown). At the first upper end 5 of the housing, the cable 20, or at least the conductor of the cable, can e.g. be electrically connected to some type of electric connector, known perse, or the cable can extend outside of the housing, through an opening in the upper end member 11 (not shown). In the embodiment of Fig. 2, the cable is also fixed at the first upper end 5 of the housing, to the first upper end member 7.

In the illustration to the left in Fig. 2 is shown how the housing 3 has an internal length L, between the end members 7, 11, while the cable 20 inside the housing has a length L+δℓ, i.e. is longer than the housing. Consequently, the cable is snaking and it is not straightened inside the housing. In order to make it possible to straighten the cable inside the housing, a length adjustment arrangement has been provided which in the embodiment of Fig. 2 comprises a length adjustable wall section 17 of the housing, which length adjustable wall section forms part of the length adjustment arrangement of the invention. The length adjustable wall section is in the illustrated embodiment configured as a bellows shaped or corrugated wall section 18 that is made of a flexible material such that it may expand or elongate in the longitudinal/axial direction of the housing, i.e. the longitudinal/axial direction of the cable. The length of the bellows shaped wall section is X and as shown in the illustration to the right in Fig. 2, the internal length of the housing can thus be increased to L+δℓ by expanding the bellows to have the expanded length of X+δℓ. By doing this, the internal length of the housing will essentially correspond to the length of the cable inside the housing, and the cable will be straightened.

The length adjustment arrangement further comprises an arrangement generating a length adjustment of the length adjustable wall section 17. In the illustrated embodiment of Fig. 2 and all the other figures, the indicated force F is the total force, which is named Fₜₒₜ in the formula explained below. The length adjustment generating arrangement comprises a device 22 for applying an external mechanical force Fₑₓₜ on an end member of the housing, in this case the first, upper end member 7. This device 22 may for example include bolts and/or nuts providing a torque, or any similar device known per se that will provide the intended effect of pulling or pushing at the end plate and thereby extending the bellows and thus increasing the internal length of the housing 3. Shown in the figure is also the inherent spring force Fₛ of the bellows. It should be noted that the spring force Fₛ can work in both directions. In the illustration to the left in Fig. 2, the spring force Fₛ can be either nil or it can be negative if the bellows is pre-stressed/precompressed, and the bellows works as a compression spring. When the bellows has been extended and the spring force will work to pull the bellows back to its non-extended condition once the pulling force Fₑₓₜ of the device 22 ceases.

The general formula for the total force Fₜₒₜ that will influence the upper end member 7 of the device, for the cable termination in an upright position, can be written as: Fₜₒₜ= Fₑₓₜ + Fₚ -F_{cable} - F_{gravity} ± Fₛ, wherein:
Fₑₓₜ = External force, e.g. a mechanical force exerted on the upper end member;
Fₚ = Force exerted by the gas pressure inside the housing, expressed as p x A, where A is the internal active area of the end member 7 and p is the internal pressure inside the housing and which works on the active area A;
F_{cable} = Cable force, which is a force that originates from the cable itself since the cable usually has an inherent force that will cause the cable to return to its original form, which usually is slightly curved due to its manufacturing and storage in a rolled up form;
F_{gravity} = Force of gravity exerted by the weight of the cable and the upper end member 7;
Fₛ = Spring force of e.g. the bellows shaped wall section, which can work in both directions, as indicated by the ± sign, and is expressed as k x δℓ, where k is the spring constant and δℓ is the length of cable that exceeds the internal length L of the housing.

The required force Fₑₓₜ of the device 22 needs to be measured/calculated in advance with consideration taken to the spring force Fₛ of the selected bellows 17 of the length adjustable wall section, in order to obtain a resulting total force Fₜₒₜ in accordance with the above formula.

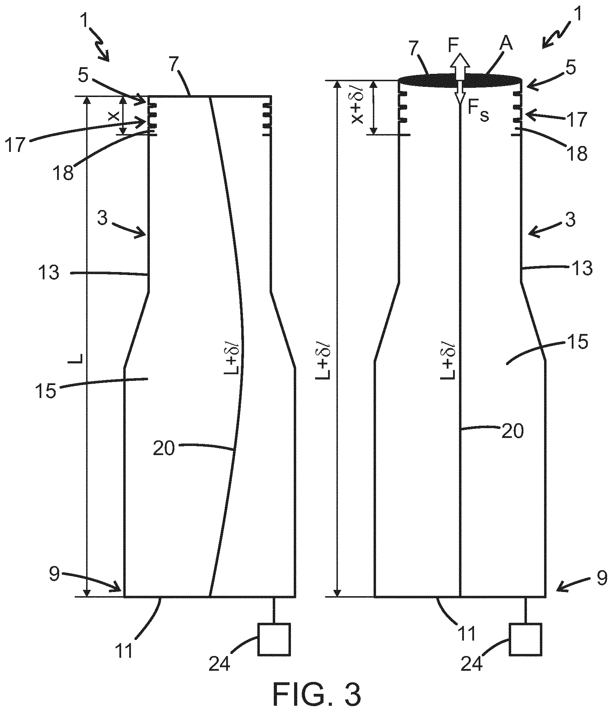

In Fig. 3 is illustrated another embodiment of the arrangement generating the length adjustment of the length adjustable wall section 17 of the side wall 13 of the housing 3. Also in this case the length adjustable wall section 17 is illustrated as being configured of a bellows 18 part. The bellows may be pre-stressed or not. The hollow interior 15 of the housing 3 is filled with an insulating medium exerting an internal pressure on the active area A of the upper end member 7. Preferably the insulating medium is an insulation gas. In this embodiment, the arrangement generating the length adjustment of the length adjustable wall section 17 of the side wall 13 of the housing 3 comprises a regulator device 24. The regulator device is connected to a pressure source containing pressurized insulating medium (not shown). By means of this regulator device 24 the internal pressure inside the housing 3 may be increased or decreased. When the internal pressure inside the insulator housing 3 is increased, the pressure force on the active area, i.e. the internal area of the end member 7, will increase and the increased force will act to extend the bellows 18 and thereby straighten the cable 20, in analogy with what has been described above. Usually, a desired pressure is determined in advance and the insulator housing is filled accordingly. Alternatively, the active area A of the end member 7 can be increased in order to obtain the same effect. A choice of a desired active area is made in advance.

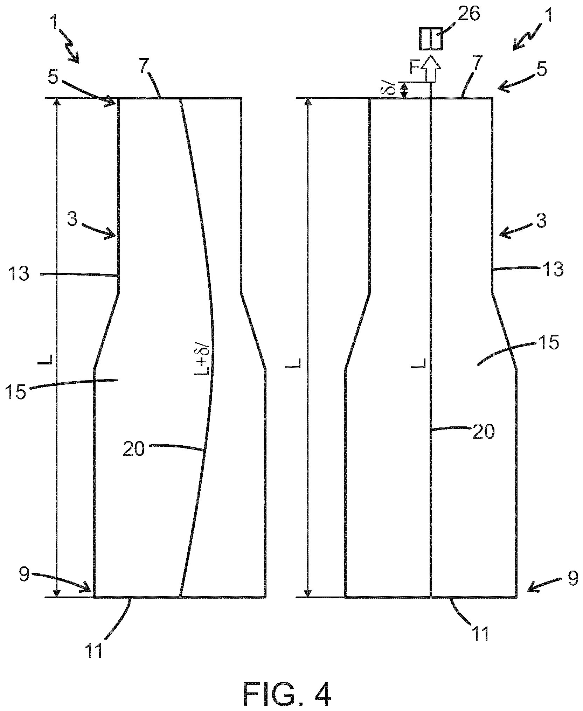

In Fig. 4 is illustrated another alternative embodiment of an arrangement generating the length adjustment of the length adjustable wall section 17. In this embodiment, the cable 20 is not fixed to the upper end member 7, only to the lower end member 11. Instead the cable is slidably supported in an opening (not shown) in the upper end member 7 and extends externally of the upper end member. Also externally of the upper end member is provided an arrangement for generating length adjustment of the cable inside the housing, and more precisely adjustment of the length of cable that extends between the upper and the lower end members 7, 11, inside the housing 3. This arrangement comprises an external device 26 for applying a mechanical force on the cable 20. By pulling with a force F on the cable, the cable will be straightened. The additional length of cable δℓ that was previously inside the housing resulting in cable snaking, as shown in the illustration to the left in Fig. 4, has now been pulled outside of the housing. The length of cable L inside the housing is thus essentially equal to the internal length L of the housing. This external device 26 may for example include bolts and/or nuts providing a torque, or any similar device known per se that will provide the intended pulling force.

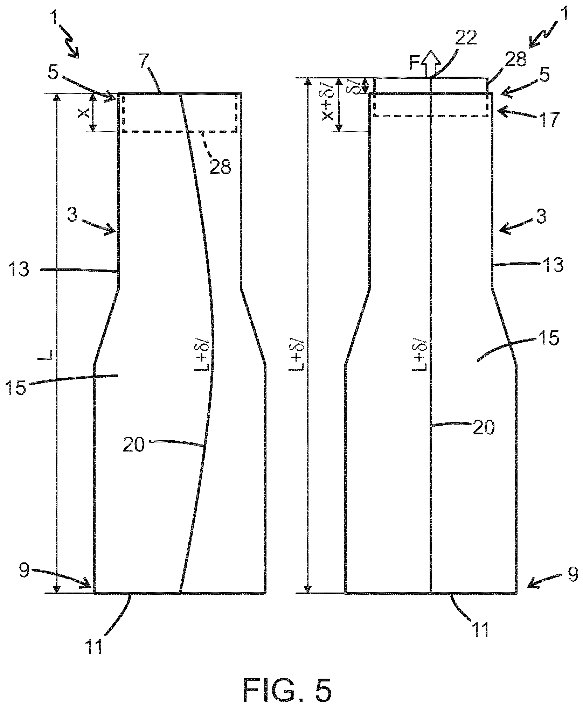

Fig. 5 illustrates an alternative embodiment of the length adjustable wall section 17 on the housing 3. In this embodiment, the length adjustable wall section is configured as a telescopic wall section 28. To the left in Fig. 5 is illustrated a cable 20 having a length of L + δℓ inside a housing 3, which housing has a length of L. The cable is thus too long and snaking occurs. The telescopic wall section 28 is connected with the upper end member 7, at the upper end 5 of the housing 3, and the telescopic wall section may be pulled out of the housing for a length δℓ that corresponds to the extra length of cable inside the housing by means of a length adjustment generating arrangement comprising a device 22 for applying a mechanical force F on an end member of the housing, in this case the first, upper end member 7. This device 22 is a device corresponding to the mechanical device described in connection with Fig. 2. Instead of a device 22 applying a mechanical force on the upper end member 7 connected to the telescopic wall section 28, the solutions described in connection with Fig. 3 and Fig. 4 regarding the arrangement for generating length adjustment, can also be applied together with the telescopic wall section.

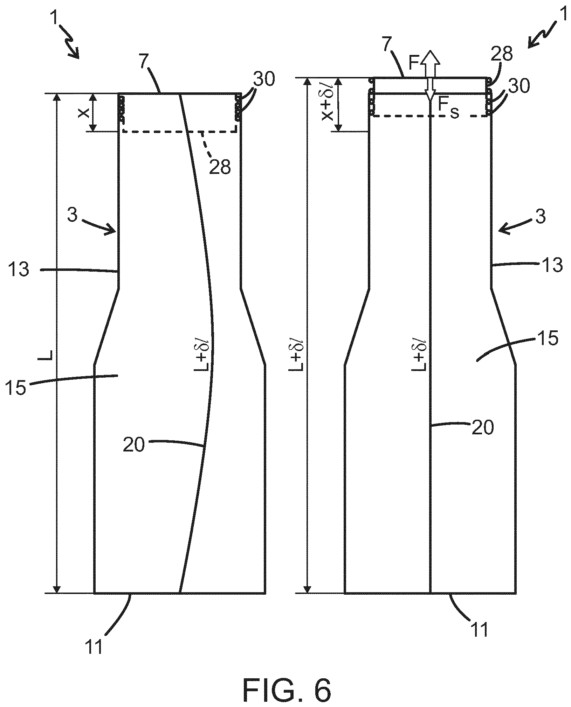

In Fig. 6 is illustrated an alternative in which is provided a supplementary spring member 30. Generally, a supplementary spring member may be used to provide several different functions. In the illustrated example, it can be used to provide pre-stressing of the telescopic wall section and this can be achieved either by a compression spring or a tension spring. In the example of Fig. 6, the spring member 30 is a compression spring arranged between the telescopic wall section 28 and the side wall 13 of the housing, such that when the spring member 30 is de-compressed the telescopic wall section 28 is extended and projects from the housing 3. In Fig. 6 the arrangement for generating a length adjustment is the same as in Fig. 5, but naturally a corresponding spring member may also be used in combination with any other of the described arrangements for generating length adjustment. A corresponding spring member may also be used in combination with the bellows arrangement, if an enhancement of the spring effect is desired. A spring member may also be used as a return spring, if required.

The method, according to the invention, comprises straightening of a length of a high voltage cable located in a cable termination device, which cable termination device comprises a hollow housing with a first end member at a first end of the housing and a second end member at a second end of the housing and a side wall connecting said end member, which length of cable extends from the first end member to the second end member of the housing. The method comprises the step of adjusting the internal length of the housing between the end members and/or adjusting the length of cable located inside the housing in relation to each other such that the internal length of the housing essentially corresponds to the length of the cable that is located inside the housing.

The method may comprise adjusting the internal length of the housing by adjusting the length of a length adjustable wall section of the side wall of the housing. This can be achieved by applying a mechanical force on an end member of the housing and thereby generating a length adjustment of the length adjustable wall section. Alternatively, the adjustment of the internal length of the housing may be achieved by regulating the pressure of an insulation medium inside the housing and thereby is generated a length adjustment of the length adjustable wall section. According to another alternative, the method may comprise adjusting an active area of at least one end member of the housing, thereby adjusting the resulting pressure force on the end member from the insulation medium inside the housing and generating a length adjustment of the length adjustable wall section.

Alternatively to adjusting the internal length of the housing, the method may comprise applying a mechanical force on the cable and thereby adjusting the length of the cable inside the housing resulting in a straightening of the cable inside the housing.

In the figures, the length adjustable wall section of the housing is illustrated as being located at the top end of the housing. However, the length adjustable wall section may be located anywhere along the housing wall, in its length direction.

## Claims

1. An insulated high voltage cable termination device (1) comprising a hollow housing (3) with a first end member (7) at a first end (5) of the housing and a second end member (11) at a second end (9) of the housing, and a side wall (13) connecting said end members, said housing being filled with an insulation medium, the device further comprising a length of high voltage cable (20) located inside the housing and extending from the first end member to the second end member, **characterized in that** the device comprises a length adjustment arrangement (18; 28; 22; 24; 26) for adjustment of an internal length of the housing (3) between the end members and/or the length of the cable (20) inside the housing, and wherein the length adjustment arrangement (18; 28; 22; 24; 26) is arranged to straighten the cable (20) inside the housing.

2. The cable termination device according to claim 1, wherein the length adjustment arrangement comprises a length adjustable wall section (17) of the side wall of the housing and an arrangement (22; 24; 26) generating a length adjustment of the length adjustable wall section.

3. The cable termination device according to claim 2, wherein the length adjustable wall section comprises a bellows shaped wall section (18).

4. The cable termination device according to claim 2, wherein the length adjustable wall section comprises a telescopic wall section (28).

5. The cable termination device according to any one of claims 2-4, wherein the length adjustable wall section (17) is pre-stressed by a compression force.

6. The cable termination device according to any one of claims 2-5, wherein the arrangement generating length adjustment of the length adjustable wall section comprises a device for applying a mechanical force (22) on an end member (7; 11) of the housing (3) and thereby generating a length adjustment of the length adjustable wall section (17).

7. The cable termination device according to any one of claims 2-5, wherein the arrangement generating length adjustment of the length adjustable wall section (17) comprises a regulator device (24) that regulates the pressure of an insulation medium inside the housing (3).

8. A housing (3) for an insulated high voltage cable termination device, comprising a first end member (7) at a first end (5) of the housing and a second end member (11) at a second end (9) of the housing, and a side wall (13) connecting said end members, said housing being hollow and being adapted to receive a high voltage cable (20) therein extending from the first end member to the second end member of the housing, **characterised in that** the side wall (13) of the housing has a length adjustable wall section (17) by means of which the internal length of the housing between the end members can be adjusted, and wherein the length adjustable wall section (17) is arranged to straighten the cable (20) inside the housing.

9. The housing according to claim 8, wherein the length adjustable wall section (17) comprises a bellows shaped wall section (18).

10. The housing according to claim 8, wherein the length adjustable wall section (17) comprises a telescopic wall section (28).

11. A method for straightening a length of a high voltage cable (20) located in an insulated high voltage cable termination device (1), which cable termination device comprises a hollow housing (3) with a first end member (7) at a first end (5) of the housing and a second end member (11) at a second end (9) of the housing and a side wall (13) connecting said end members, said housing being filled with an insulation medium, wherein the length of cable extends from the first end member to the second end member of the housing, **characterised in** adjusting the internal length of the housing between the end members and/or adjusting the length of the cable that is located inside the housing such that the internal length of the housing essentially corresponds to the length of the cable that is located inside the housing.

12. The method according to claim 11, comprising adjusting the internal length of the housing (30) by adjusting the length of a length adjustable wall section (17) of the side wall (13) of the housing.

13. The method according to claim 12, comprising pre-stressing the length adjustable wall section (17) by a compression force.

14. The method according to any one of claims 12 or 13, comprising applying a mechanical force on an end member (7; 11) of the housing (3) and thereby generating a length adjustment of the length adjustable wall section (17).

15. The method according to anyone of claims 12-14, comprising regulating the pressure of an insulation medium inside the housing (3) and thereby generating a length adjustment of the length adjustable wall section (17).

## Patentansprüche

1. Abschlussvorrichtung für isoliertes Hochspannungskabel (1), umfassend ein hohles Gehäuse (3) mit einem ersten Endelement (7) an einem ersten Ende (5) des Gehäuses und einem zweiten Endelement (11) an einem zweiten Ende (9) des Gehäuses, und eine Seitenwand (13), die die Endelemente verbindet, wobei das Gehäuse mit einem Isolationsmedium gefüllt ist, wobei die Vorrichtung ferner eine Länge des Hochspannungskabels (20) umfasst, das innerhalb des Gehäuses angeordnet ist und sich vom ersten Endelement zum zweiten Endelement erstreckt, **dadurch gekennzeichnet, dass** die Vorrichtung eine Längeneinstellanordnung (18; 28; 22; 24; 26) zum Einstellen einer inneren Länge des Gehäuses (3) zwischen den Endelementen und/oder der Länge des Kabels (20) im Inneren des Gehäuses umfasst, und wobei die Längeneinstellanordnung (18; 28; 22; 24; 26) angeordnet ist, um das Kabel (20) im Inneren des Gehäuses zu richten.

2. Kabelabschlussvorrichtung nach Anspruch 1, wobei die Längeneinstellanordnung einen längenverstellbaren Wandabschnitt (17) der Seitenwand des Gehäuses und eine Anordnung (22; 24; 26) zum Erzeugen einer Längeneinstellung des längenverstellbaren Wandabschnitts umfasst.

3. Kabelabschlussvorrichtung nach Anspruch 2, wobei der längenverstellbare Wandabschnitt einen balgförmigen Wandabschnitt (18) umfasst.

4. Kabelabschlussvorrichtung nach Anspruch 2, wobei der längenverstellbare Wandabschnitt einen zusammenschiebbaren Wandabschnitt (28) umfasst.

5. Kabelabschlussvorrichtung nach einem der Ansprüche 2-4, wobei der längenverstellbare Wandabschnitt (17) durch eine Druckkraft vorgespannt ist.

6. Kabelabschlussvorrichtung nach einem der Ansprüche 2-5, wobei die Anordnung, die eine Längeneinstellung des längenverstellbaren Wandabschnitts erzeugt, eine Vorrichtung zum Aufbringen einer mechanischen Kraft (22) auf ein Endelement (7; 11) des Gehäuses (3) umfasst, um auf diese Weise eine Längeneinstellung des längenverstellbaren Wandabschnitts (17) zu erzeugen.

7. Kabelabschlussvorrichtung nach einem der Ansprüche 2-5, wobei die Anordnung, die eine Längeneinstellung des längenverstellbaren Wandabschnitts (17) erzeugt, eine Reglervorrichtung (24) umfasst, die den Druck eines Isolationsmediums im Inneren des Gehäuses (3) reguliert.

8. Gehäuse (3) für eine Abschlussvorrichtung für isoliertes Hochspannungskabel, umfassend ein erstes Endelement (7) an einem ersten Ende (5) des Gehäuses und ein zweites Endelement (11) an einem zweiten Ende (9) des Gehäuses und eine Seitenwand (13), die die Endelemente verbindet, wobei das Gehäuse hohl ist und zur Aufnahme eines Hochspannungskabels (20) ausgelegt ist, das sich darin vom ersten Endelement bis zum zweiten Endelement des Gehäuses erstreckt, **dadurch gekennzeichnet, dass** die Seitenwand (13) des Gehäuses einen längenverstellbaren Wandabschnitt (17) aufweist, mittels dem die innere Länge des Gehäuses zwischen den Endelementen einstellbar ist, und wobei der längenverstellbare Wandabschnitt (17) angeordnet ist, um das Kabel (20) innerhalb des Gehäuses zu richten.

9. Gehäuse nach Anspruch 8, wobei der längenverstellbare Wandabschnitt (17) einen balgförmigen Wandabschnitt (18) umfasst.

10. Gehäuse nach Anspruch 8, wobei der längenverstellbare Wandabschnitt (17) einen zusammenschiebbaren Wandabschnitt (28) umfasst.

11. Verfahren zum Richten einer Länge eines Hochspannungskabels (20), das sich in einer Abschlussvorrichtung für isoliertes Hochspannungskabel (1) befindet, wobei die Kabelabschlussvorrichtung ein hohles Gehäuse (3) mit einem ersten Endelement (7) an einem ersten Ende (5) des Gehäuses und einem zweiten Endelement (11) an einem zweiten Ende (9) des Gehäuses und eine Seitenwand (13), die die Endelemente verbindet, umfasst, wobei das Gehäuse mit einem Isolationsmedium gefüllt ist, wobei sich die Länge des Kabels vom ersten Endelement bis zum zweiten Endelement des Gehäuses erstreckt, **gekennzeichnet durch** derartiges Einstellen der inneren Länge des Gehäuses zwischen den Endelementen und/oder Einstellen der Länge des Kabels, welches sich im Inneren des Gehäuses befindet, dass die innere Länge des Gehäuses im Wesentlichen der Länge des Kabels entspricht, welches sich im Inneren des Gehäuses befindet.

12. Verfahren nach Anspruch 11, das Einstellen der inneren Länge des Gehäuses (30) durch Einstellen der Länge eines längenverstellbaren Wandabschnitts (17) der Seitenwand (13) des Gehäuses umfassend.

13. Verfahren nach Anspruch 12, das Vorspannen des längenverstellbaren Wandabschnitts (17) mittels einer Druckkraft umfassend.

14. Verfahren nach einem der Ansprüche 12 oder 13, das Aufbringen einer mechanischen Kraft auf ein Endelement (7; 11) des Gehäuses (3) umfassend, um auf diese Weise eine Längeneinstellung des längenverstellbaren Wandabschnitts (17) zu erzeugen.

15. Verfahren nach einem der Ansprüche 12-14, das Regulieren des Drucks eines Isolationsmediums im Inneren des Gehäuses (3) umfassend, um auf diese Weise eine Längeneinstellung des längenverstellbaren Wandabschnitts (17) zu erzeugen.

## Revendications

1. Dispositif de terminaison de câble haute tension isolé (1) comprenant un boîtier creux (3) avec un premier élément d'extrémité (7) à une première extrémité (5) du boîtier et un deuxième élément d'extrémité (11) à une deuxième extrémité (9) du boîtier, et une paroi latérale (13) reliant lesdits éléments d'extrémité, ledit boîtier étant rempli avec un milieu isolant, le dispositif comprenant en outre une longueur de câble haute tension (20) située à l'intérieur du boîtier et s'étendant du premier élément d'extrémité au deuxième élément d'extrémité, **caractérisé en ce que** le dispositif comprend un système de réglage de longueur (18 ; 28 ; 22 ; 24 ; 26) pour le réglage d'une longueur interne du boîtier (3) entre les éléments d'extrémité et/ou de la longueur du câble (20) à l'intérieur du boîtier, et dans lequel le système de réglage de longueur (18 ; 28 ; 22 ; 24 ; 26) est conçu pour redresser le câble (20) à l'intérieur du boîtier.

2. Dispositif de terminaison de câble selon la revendication 1, dans lequel le système de réglage de longueur comprend une section de paroi réglable en longueur (17) de la paroi latérale du boîtier et un système (22 ; 24 ; 26) générant un réglage de longueur de la section de paroi réglable en longueur.

3. Dispositif de terminaison de câble selon la revendication 2, dans lequel la section de paroi réglable en longueur comprend une section de paroi en forme de soufflet (18).

4. Dispositif de terminaison de câble selon la revendication 2, dans lequel la section de paroi réglable en longueur comprend une section de paroi télescopique (28).

5. Dispositif de terminaison de câble selon l'une quelconque des revendications 2 à 4, dans lequel la section de paroi réglable en longueur (17) est précontrainte par une force de compression.

6. Dispositif de terminaison de câble selon l'une quelconque des revendications 2 à 5, dans lequel le système générant un réglage de longueur de la section de paroi réglable en longueur comprend un dispositif destiné à appliquer une force mécanique (22) sur un élément d'extrémité (7 ; 11) du boîtier (3) et à générer ainsi un réglage de longueur de la section de paroi réglable en longueur (17).

7. Dispositif de terminaison de câble selon l'une quelconque des revendications 2 à 5, dans lequel le système générant un réglage de longueur de la section de paroi réglable en longueur (17) comprend un dispositif de régulation (24) régulant la pression d'un milieu isolant à l'intérieur du boîtier (3).

8. Boîtier (3) pour un dispositif de terminaison de câble haute tension isolé, comprenant un premier élément d'extrémité (7) à une première extrémité (5) du boîtier et un deuxième élément d'extrémité (11) à une deuxième extrémité (9) du boîtier, et une paroi latérale (13) reliant lesdits éléments d'extrémité, ledit boîtier étant creux et adapté pour recevoir un câble haute tension (20) dans celui-ci, lequel s'étend du premier élément d'extrémité au deuxième élément d'extrémité du boîtier, **caractérisé en ce que** la paroi latérale (13) du boîtier comporte une section de paroi réglable en longueur (17) permettant de régler la longueur interne du boîtier entre les éléments d'extrémité, et dans lequel la section de paroi réglable en longueur (17) est conçue pour redresser le câble (20) à l'intérieur du boîtier.

9. Boîtier selon la revendication 8, dans lequel la section de paroi réglable en longueur (17) comprend une section de paroi en forme de soufflet (18).

10. Boîtier selon la revendication 8, dans lequel la section de paroi réglable en longueur (17) comprend une section de paroi télescopique (28).

11. Procédé pour le redressement d'une longueur d'un câble haute tension (20) située dans un dispositif de terminaison de câble haute tension isolé (1), ledit dispositif de terminaison de câble comprenant un boîtier creux (3) avec un premier élément d'extrémité (7) à une première extrémité (5) du boîtier et un deuxième élément d'extrémité (11) à une deuxième extrémité (9) du boîtier, et une paroi latérale (13) reliant lesdits éléments d'extrémité, ledit boîtier étant rempli avec un milieu isolant, la longueur de câble s'étendant du premier élément d'extrémité au deuxième élément d'extrémité du boîtier, **caractérisé par** le réglage de la longueur interne du boîtier entre les éléments d'extrémité et/ou par le réglage de la longueur du câble située à l'intérieur du boîtier de manière à ce que la longueur interne du boîtier corresponde essentiellement à la longueur du câble située à l'intérieur du boîtier.

12. Procédé selon la revendication 11, comprenant le réglage de la longueur interne du boîtier (30) par le réglage de la longueur d'une section de paroi réglable en longueur (17) de la paroi latérale (13) du boîtier.

13. Procédé selon la revendication 12, comprenant la précontrainte de la section de paroi réglable en longueur (17) par une force de compression.

14. Procédé selon l'une quelconque des revendications 12 ou 13, comprenant l'application d'une force mécanique sur un élément d'extrémité (7 ; 11) du boîtier (3), et par conséquent la génération d'un réglage de longueur de la section de paroi réglable en longueur (17).

15. Procédé selon l'une quelconque des revendications 12 à 14, comprenant la régulation de la pression d'un milieu isolant à l'intérieur du boîtier (3) et par conséquent la génération d'un réglage de longueur de la section de paroi réglable en longueur (17).
